Europäisches Patentamt

European Patent Office

Office européen des brevets

(11) Publication number: **0 483 781 A2**

# EUROPEAN PATENT APPLICATION

(21) Application number: **91118464.6**

(22) Date of filing: **30.10.91**

(51) Int. Cl.5: **B23Q  3/157**

(30) Priority: **01.11.90 JP 293720/90**

(43) Date of publication of application:
**06.05.92 Bulletin  92/19**

(84) Designated Contracting States:
**DE FR GB IT NL**

(71) Applicant: **KITAMURA MACHINERY CO.,LTD.**
**1870 Toide-Komyoji**
**Takaoka-shi Toyama-ken(JP)**

(72) Inventor: **Kitamura, Koichiro**
**3-11-5 Ekinan, Takaoka-shi**
**Toyama-ken(JP)**
Inventor: **Taniguchi, Katsuji**
**3-13-8, Ekinan, Takaoka-shi**
**Toyama-ken(JP)**
Inventor: **Yamada, Shigeru c/o Kitamura**
**Machinery Co. Ltd.**
**1870 Toide Komyoji, Takaoka-shi**
**Toyama-ken(JP)**

(74) Representative: **Patentanwälte RUFF, BEIER**
**und SCHÖNDORF**
**Neckarstrasse 50**
**W-7000 Stuttgart 1(DE)**

(54) **Tool magazine.**

(57) A tool magazine for storing a plurality of tools to be used in a machine tool, comprisesa base, a magazine body rotatably mounted on the base about a rotational axis, and a plurality of transfer means mounted on the magazine body. Each transfer means stores a plurality of tools and transfers a selected tool to a transfer point. Each of the transfer means has an endless track. The endless tracks are arranged in a polygonal manner around the rotational axis of the magazine body .

Rank Xerox (UK) Business Services
(−/2.17/2.1)

## BACKGROUND OF THE INVENTION

The present invention relates to a tool magazine for storing a plurality of tools to be used in a machine tool.

Tools are transferred between the tool magazine and a spindle in the machine tool by a conventional automatic tool changer which includes a transfer means for transferring a selected one of the tools to a transfer point. The transfer means has a magazine body and an endless track located on one face of the magazine body. The largest number of tools which this type tool magazine can store in the transfer means is about 40 to 60.

If any other tools in addition to said 40-60 tools are required for use in the machine tool, an operator must manually remove some specific number of tools from the endless track of the transfer means and then set the same number of new tools in place of them therein.

Recently, machinings by FMS become more and more complicated, and it takes a long time in order to complete a single machining operation. In case of such complicated machinings, one or more machining centers continue to operate without operators in a factory for the purpose of various machinings for a long time. For such a reason, a large number of tools must be stored in a tool magazine.

If the conventional tool magazines are designed to store such a large number of tools, the endless track of the transfer means must be extremely long. However, in such a case, it takes a long time in order to index a selected tool to a desired transfer point because an index time is usually in proportion to the length of the endless track. Also, the tool magazine itself requires a large space in a workshop.

## SUMMARY OF THE INVENTION

The object of the present invention is to provide a tool magazine in which a large number of tools can be stored in a relatively small space and an index time can be shortened.

According to this invention, a tool magazine includes a base, a magazine body rotatably mounted on the base about a rotational axis, and a plurality of transfer means arranged on the magazine body. Each of the transfer means stores a plurality of tools and transfers a selected one of the tools to a transfer point. Each of the transfer means includes an endless track. The endless tracks are arranged in a polygonal manner around the rotational axis of the magazine body. For example, a preferred shape of the magazine body is a rectangular parallelopiped form. In this case, the magazine body has four vertical surfaces on each of which an endless track is arranged for storing a large number of tools. The number of vertical surfaces for arranging endless tracks can be five or more although a relatively large floor space is required for the tool magazine.

The magazine body is rotated about its rotation axis. The transfer means is moved so as to index a desired tool to a transfer point near an automatic tool changer. Thereafter a used tool is changed for a new tool by the automatic tool changer.

A tool magazine according to this invention can store a large number tools within a relatively small floor space. In a tool changing operation, it takes a relatively short time in view of the large number of tools stored therein.

## BRIEF DESCRIPTION OF THE INVENTION

Fig.1 is a perspective view showing a tool magazine according to a preferred embodiment of the invention;
Fig.2 is a perspective view showing an operation of the tool magazine as shown in Fig. 1 but a different tool changer is used; and
Fig.3 is a perspective view showing another operation of the tool magazine as shown in Fig. 1 but a different tool changer is used.

## DESCRIPTION OF THE PREFERRED EMBODIMENTS

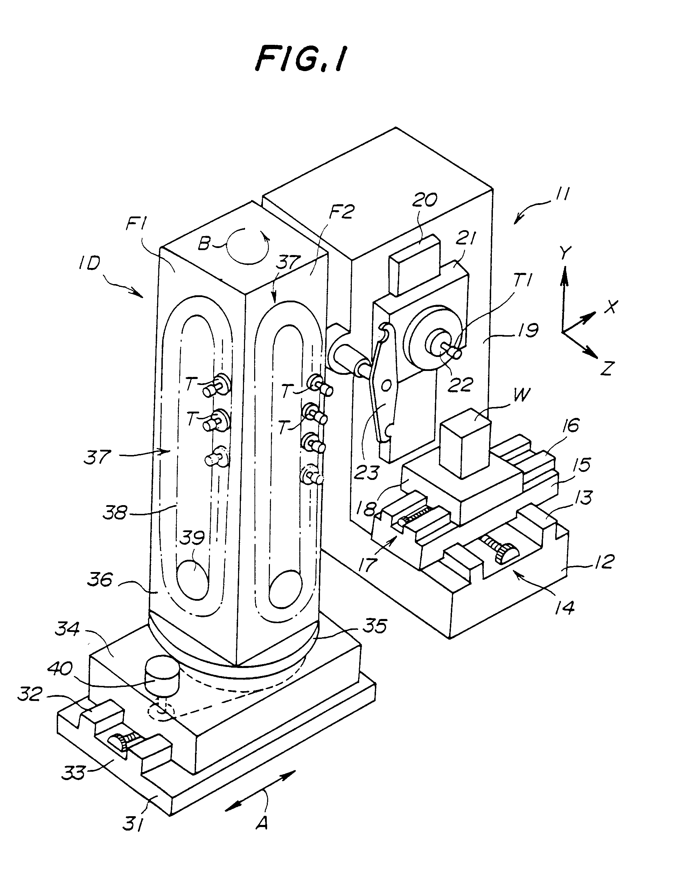

As shown in Fig.1, a tool magazine 10 according to this invention is installed adjacent to a machine tool 11. Although the machine tool 11 is a horizontal machining center in the embodiment of Fig. 1, it may be a vertical machining center or any other machine tool.

The machine tool 11 includes a base 12 at its bottom portion. A column 19 is vertically arranged on the base 12. The column 19 has a vertical guide 20 fixed on a front surface thereof. A spindle head 21 is mounted on the column 19 so as to move slidably along the vertical guide 21 in the direction of the arrow Y and the opposite direction. The spindle head 21 has a spindle 22 rotatably mounted thereon. A tool T1 is inserted into the spinlde 22 in a horizontal direction and then clamped by a clamping means (not shown). The tool T1 is unclamped when it is to be changed for a new tool.

The base 12 has two horizontal rails 13 fixed on a top face thereof. A saddle 15 is mounted on the base 12 so as to move slidably along the rails 13. The saddle 15 is moved by a drive means 14 in the Z direction along the rails 13. The drive means 14 comprises a motor, a ball screw to be rotated by the motor, and a ball nut fixed on an underside of the saddle 15 for engaging with the ball screw. When the ball screw is rotated by the motor, the ball nut engaging with the ball screw and the saddle 15 are moved along the ball screw in the Z direction.

The saddle 15 has two rails 16 fixed on a top face thereof. A table 18 is slidably mounted on the saddle 15 so as to slide along the rails 16 in the X direction. The table 18 is moved in the X direction by a drive means 17 in a similar manner to that of the above-stated drive means 14.

A workpiece W is fixedly supported on the table 18. The table 18 may be provided with a conventional rotary stage (not shown) which can be rotated about its vertical rotation axis and/or horizontal rotation axis for indexing purposes.

An automatic tool changer 23 is disposed at a side portion of the column 19 in a position between the tool magazine 10 and the spindle 22. The tool changer 23 can be any conventional one. Good examles of the tool changer are described in Japanese Patent Laid-Open Nos. 62-188641 and 63-57137.

The tool magazine 10 according to the invention is installed adjacent to the machine tool 11.

The tool magazine 10 has a base 31 set on a floor in a factory. The base has two rails 32 fixed on a top face thereof.

A slide member 34 is slidably mounted on the base 31 so as to slide along the rails 32. The slide member 34 is moved by a drive means 33 along the rails 32 in the direction A.

The drive means 33 comprises a motor, a feed screw extending along the direction A to be driven by the motor, and a nut fixed to the slide member 34 for engaging with the feed screw. When the feed screw is rotated by the motor, the slide member 34 is moved in the direction A.

A rotary stage 35 is rotatably mounted on the slide member 34. The rotary stage 35 has a sprocket fixed at a bottom thereof. An index motor 40 is placed on the slide member 34 and has a sprocket fixed to an output shaft thereof. A chain is arranged between the sprocket of the rotary stage 35 and the sprocket of the index motor 40 for the transfer purpose. The rotary stage 35 is rotated about its rotational axis by the index motor 40 by way of the chain. A magazine body 36 is mounted on the rotary stage 35.

The magazine body 36 has a substantially rectangular parallelopiped shape having four rectangular side or vertical flat surfaces F1, F2. A transfer means is mounted on each of the four side surfaces F1 and F2 of the magazine body. Each of the transfer means 37 has a vertical longitudinal endless track for storing a large number of tools T. The total nubmer of the transfer means 37 is four in the embodiment of Fig. 1 although only two of them are shown. The four endless tracks are arranged symmetrically about the rotational axis of the magazine body. Each transfer means 37 can store 40 tools. Therefore the tool magazine can store in total 160 tools in the four transfer means 37.

The transfer means 37 includes a chain means 38, sprockets 39 and a driving motor (not shown). Four driving motors for four endless tracks are used in the magazine body 36. The chain means 38 comprises a plurality of plates 41 and tool pots 42 supported thereby. Each of tool pots 42 is designed to receive a tool holder together with a tool. The plates 41 are interconnected by the tool pots 42. Each tool pot 42 has a biasing means including springs at a bottom thereof. The tool pot 42 can hold a holding portion of a tool holder by the biasing means in order that the tool holder does not by accident fall when indexing. The endless track 37 may be a conventional one such as described in Japanese Patent Laid-Open No. 62-188641.

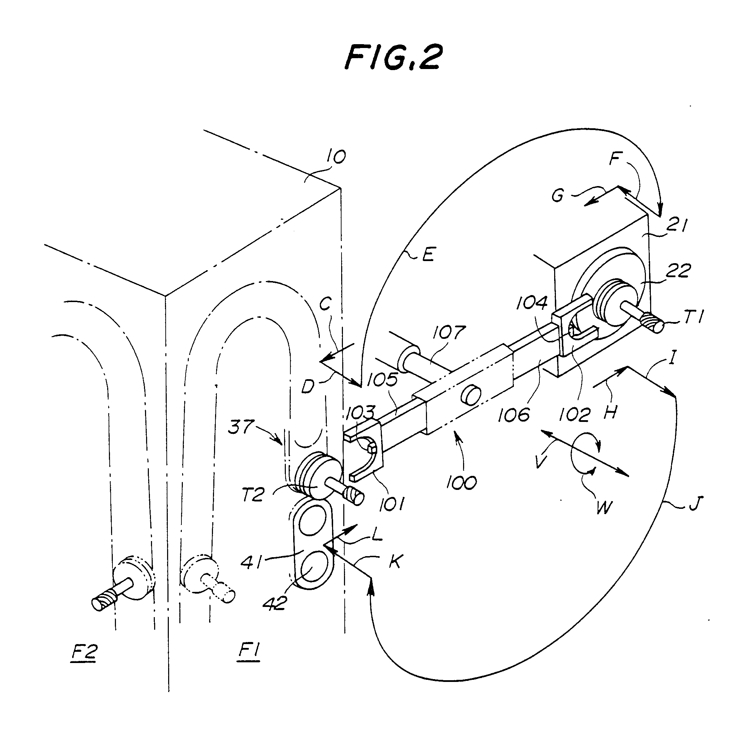

A tool changing operation taking place between the spindle 22 and the tool magazine 10 will be described with reference to Fig.2.

A tool changer 100 shown in Fig.2 is somewhat different in construction from the tool changer 23 shown in Fig.1. The tool changer 100 has two arms 105, 106 which can be rotated about a shaft 107 in the direction shown by the arrow W. The shaft 107 can be telescopically moved in the direction shown by the arrow V along its rotational axis. Each of the arms 105, 106 can be telescopically moved in its longitudinal direction. Each of the arms 105, 106 has a grip member 101, 102 for detachably holding a tool holder. The grip member 101 or 102 can be biased by a spring means (not shown) so as to securely hold a tool holder. The gripping member 101 or 102 has a stop member 103 or 104 at its bottom portion. When the arm 105 or 106 is is moved so as to extend toward a tool holder inserted in the spindle 22 or one of the tool pots 42, the gripping member 101 or 102 is opened against the spring force so as to hold the tool holder.

Fig.2 shows a condition in which a machining operation by an used tool T1 has been finished and the spindle head has been located at the same level as the tool changer or at a tool transfer level, while a new tool T2 in the work magazine to be used in a subsequent operation is indexed at the same level as the tool changer or at a transfer point in the tool magazine 10.

The used tool will be changed for the new tool as follows:

(1) The arms 105, 106 are extended as shown by the arrows C, H so that the gripping members 101, 102 grip the new tool T2 and the used tool T1, respectively. When tools are gripped by the gripping members, the stop members 103, 104 engage with concave portions of respective tool holders.

(2) The shaft 107 is extended. The new tool T2 and the used tool T1 are drawn from the tool pot and the spindle 22, respectively as shown by the arrows D, I.

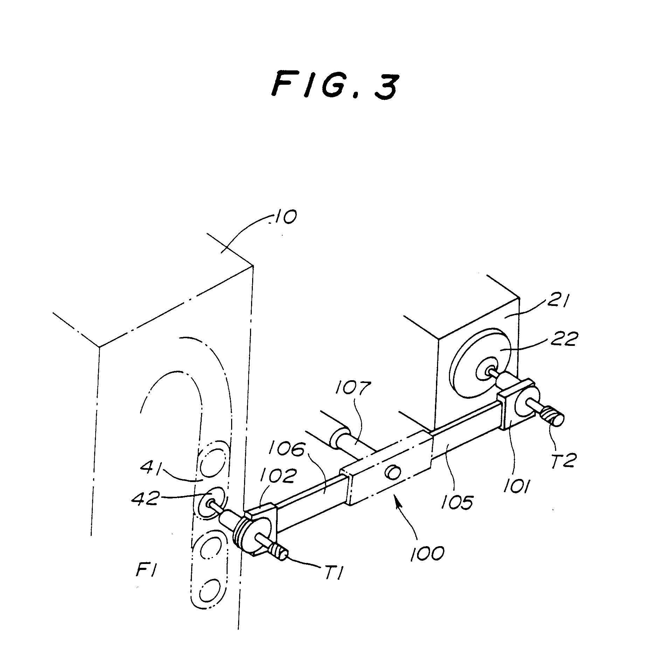

(3) The shaft 107 is rotated by 180 degrees as shown by the arrows E, J so that the positions of the new and used tools T2, T1 are exchanged as shown in Fig.3.

(4) The transfer means on the face F1 is forwarded in such a manner that a tool pot 42 in which the used tool T1 is to be stored is indexed at the transfer point. If the tool pot 42 is positioned in the other endless track, for instance, on a face F2, the magazine body is rotated about the rotational axis so that the face F2 is indexed to the front position. Before the magazine body is rotated, the magazine may be retreated to the left as shown by the arrow A in Fig.1 so that the tool changer 100 does not disturb the rotation of the main body. The above-stated steps (4) and (3) may be simultaneously carried out.

(5) The shaft 107 is contracted as shown by the arrows F, K so that the new and used tools T2 and T1 are inserted into the spindle 22 and the tool pot for the tools T1, respectively.

(6) The arms 105 and 104 are contracted as shown by the arrows G, L so that the holding members 103 and 102 release the tools T2 and T1, respectively, against the grip forces of springs.

(7) The shaft 107 is rotated by 90 degrees so that the arms 105, 104 are located in their respective vertical waiting positions. A workpiece is machined by a new tool T2.

The above-stated steps 1) to 6) is explained as one example of tool changing operations. In another example, a new tool may be preferentially inserted into the spindle before a used tool is returned into its tool pot in the tool magazine. In this case, a waiting time for changing tools may be shortened.

This invention is not limited to the above-mentioned embodiments only. The magazine body can have any plural vertical faces for arranging the transfer means 37, for instance, such as two, three, or six faces.

**Claims**

1. A tool magazine (10) for storing a plurality of tools (T) to be used in a machine tool (11), comprising:
a base (31);
a magazine body (36) rotatably mounted on the base (31) about a rotational axis thereof; and
a plurality of transfer means (37) mounted on the magazine body (36) in a polygonal manner around the rotational axis of the magazine body (36) for storing a plurality of tools (T) and transferring a selected one of the tools (T) to a transfer point.

2. A tool magazine (10) according to claim 1, wherein each of the transfer means (37) has an endless track for storing the plural tools (T), the endless track being arranged on magazine body (36) in a polygonal manner around the rotational axis of the magazine body (36).

3. A tool magazine according to claim 1 or 2, wherein the rotational axis of the magazine body (36) is a vertical axis.

4. A tool magazine according to one of the claims 1 to 3, wherein the tools (T) are horizontally stored in the transfer means (37).

5. A tool magazine according to one of the claims 1 to 4, wherein the magazine body (36) is rotated about the rotational axis by means of an index motor (40).

6. A tool magazine according to one of the claims 1 to 5, wherein each of the transfer means (37) comprises a chain means (38) arranged along the endless track and having a plurality of tool pots (42) each for receiving a tool (T), two sprockets (39) rotatably mounted on the magazine body (36) and guiding the chain means (38), and an index motor for driving the chain means (38).

7. A tool magazine according to one of the claims 1 to 6, wherein the magazine body (36) is slidably mounted on the base (31) by means of a slide means.

8. A tool magazine according to claim 7, wherein the slide means comprises a rail (32) fixed on the base (31), a feed screw rotatably mounted on the base (31) and being placed in parallel to the rail (32), a slide member (34) slidably mounted on the rail (32) and rotatably supporting the magazine body (36), a nut fixed on the slide member (34) and engaging with the feed screw, and a motor for driving the feed screw.

9. A tool magazine according to one of the claims 1 to 8, wherein the magazine body (36) is rotated about the rotational axis in such a manner that a selected one of the transfer means (37) is indexed so as to be placed adjacent to an automatic tool changer (23, 100).

10. A tool magazine according to one of the claims 1 to 9, wherein the magazine body (36) has a plurality of vertical faces (F1, F2) corresponding to a part of a polygonal shape, and each of the transfer means (37) is arranged on each of the vertical faces (F1, F2).

11. A tool magazine according to one of the claims 1 to 10, wherein the magazine body (36) is a rectangular parallelopiped magazine body having four vertical faces (F1, F2) and the transfer means (37) is arranged on each of the four vertical faces (F1, F2) of the rectangular parallelopiped magazine body (36) so that the four transfer means (37) are vertically arranged in a polygonal manner.

# FIG.1

# FIG.2

# F I G . 3